(19) **Europäisches Patentamt / European Patent Office / Office européen des brevets**

(11) **EP 4 479 794 B1**

(12) **EUROPEAN PATENT SPECIFICATION**

(45) Date of publication and mention
of the grant of the patent:
**11.06.2025 Bulletin 2025/24**

(21) Application number: **22843349.6**

(22) Date of filing: **22.12.2022**

(51) International Patent Classification (IPC):
**G02C 7/02** (2006.01)

(52) Cooperative Patent Classification (CPC):
**G02C 7/022; G02C 2202/24**

(86) International application number:
**PCT/EP2022/087631**

(87) International publication number:
**WO 2023/156052 (24.08.2023 Gazette 2023/34)**

(54) **SPECTACLE LENS TO REDUCE THE PROGRESSION OF MYOPIA**

BRILLENGLAS ZUR REDUZIERUNG DES FORTSCHREITENS VON MYOPIE

VERRE DE LUNETTES POUR RÉDUIRE LA PROGRESSION DE LA MYOPIE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **16.02.2022 PCT/EP2022/053854**

(43) Date of publication of application:
**25.12.2024 Bulletin 2024/52**

(73) Proprietor: **Carl Zeiss Vision International GmbH
73430 Aalen (DE)**

(72) Inventors:
• **OHLENDORF, Arne**
  **72074 Tübingen (DE)**
• **LATZEL, Sabine**
  **73642 Welzheim (DE)**

(74) Representative: **Carl Zeiss AG - Patentabteilung
Carl-Zeiss-Straße 22
73447 Oberkochen (DE)**

(56) References cited:
EP-A1- 3 888 894          WO-A1-2021/069443
WO-A1-2021/198362      CN-A- 107 861 262
CN-A- 109 633 925        CN-A- 111 103 701
US-A1- 2011 051 079      US-A1- 2020 073 147

**Description**

The present invention relates to a spectacle lens according to claims 1, 7, 8 and the data carrier of claim 9.

The increasing prevalence of myopia in Southeast Asian countries not only represents a potential cost factor for the healthcare system, but also entails immense costs for the economy and for individuals through the costs of purchasing corrective devices. In principle, the existing myopia can be corrected by using glasses, contact lenses, intraocular lenses or also by refractive interventions. However, research shows that this corrects the error of the refraction itself, but in many cases, especially in children, a rapid progression of the spherical portion of the refractive error is reported. It is primarily known from clinical data that refractive errors of -6 diopter or higher lead to chorioretinal changes at the retinal level. Research activities to reduce the progression of myopia has examined different modes of action of interventions and clinical trials have shown different effectiveness. In the case of spectacle lenses with a continuous increase in effectiveness in the direction of the periphery along all meridians (as e.g., spectacle lenses offered from the Carl Zeiss Vision Group under the tradename MyoVision), an efficiency of 30 % for reducing axial length growth could be demonstrated in defined test subject groups (Sankaridurg, P., Donovan, L., Varnas, S., Ho, A., Chen, X., Martinez, A., Fisher, S., Lin, Z., Smith, E.L., 3rd, Ge, J., & Holden, B. Spectacle lenses designed to reduce progression of myopia: 12-month results. Optom Vis Sci, 87 (9), 631-641). Using other optical intervention methods with spectacle lenses, far higher effectiveness of up to 70% (see e.g., Bao J, Yang A, Huang Y, Li X, Pan Y, Ding C, Lim EW, Zheng J, Spiegel DP, Drobe B, Lu F, Chen H. One-year myopia control efficacy of spectacle lenses with aspherical lenslets. Br J Ophthalmol. 2021:318367). could be proven in clinical studies.

In the case of glasses-based interventions, in particular, not only good effectiveness is important, but also aesthetics and good wearability. After all, it has been shown that wearing glasses for a long time during the day leads to greater efficacy in reducing the progression of myopia.

In the case of spectacle lens interventions, the following mechanisms of action can in principle be considered

1. Under-accommodation or lag of accommodation
2. Peripheral Blur
3. Simultaneous and alternating blur

whereby the last two mechanisms of action are partly used in unison, but the consideration according to the present invention is mainly concentrated on point 3 as follows.

EP 3561578 A1 discloses in Fig. 14a and 14b and describes in section [0102] a generic spectacle lens having a clear zone and cylindrical concentric rings. The document does not disclose any dimensions of the cylindrical concentric rings. Section [0161] discloses a preferred embodiment which is characterized in that in every circular zone having a radius in a range between 2 and 4 mm with a geometrical center located at a distance of the optical center of the spectacle lens greater or equal to said radius + 5 mm, the ratio between the sum of areas of the parts of cylindrical concentric rings located inside said circular zone and the area of said circular zone is comprised in a range between 20 % and 70 %. Said ratio is according to EP3561578 A1 the identification number.

WO 2019166659 A1 shows in Fig. 11a and 11b and describes on page 20, lines 10 to 12 the same type of spectacle lenses as shown in Fig. 14a and 14b and described in [0102] of EP 3561578 A1. According to page 28 lines 13 to 18 of WO 2019166659 A1 describes that the identification number being defined in the same manner as indicated with respect to EP 3561578 A1 above may be within the ranges of 20 % to 70 % or 30 % to 60 % or 40 % to 50 %.

Neither EP 3561578 A1 nor WO 2019166659 A1 disclose concrete dimensions for said cylindrical concentric rings described in the foregoing.

In addition, it has been found out that a plurality of wearers of spectacle lenses with cylindrical concentric rings described above with reference to EP 3561578 A1 and WO 2019166659 A1, respectively, complain of discomfort.

In addition to the variant of spectacle lenses with concentric rings shown in Fig. 11a and 11b, the publication of the application WO 2019166659 A1 discloses a spectacle lens with a plurality of concentric rings with annularly arranged and contiguously connected lenslets. According to p. 17, l. 25 to p. 19, l. 8 a lenslet diameter is at least 0.8 mm. Identification numbers as defined on p. 19 of said document, namely being a ratio between the sum of areas of the parts of cylindrical concentric rings located inside said circular zone and the area of said circular zone, are targeted to be within ranges of 20 % and 70 % or 30 % and 60 % or 40 % and 50 %.

WO2021069443 A1 discloses a method implemented by computer means for characterizing optical elements of a lens element adapted for a person. The lens element comprising: a holder comprising a refraction area having a refractive power based on a prescription for correcting an abnormal refraction of an eye of the person. Furthermore, the lens element comprises a plurality of optical elements configured so that at least one of slow down, retard or prevent a progress of the abnormal refraction of the eye of the person.

CN10963925 A relates to a flexible refractive film patch with microstructure. The film patch can be applied to all kinds of spectacle lenses. The film patch has the properties of an ordinary film patch. In addition, the film patch has a certain refractive effect. The ophthalmic lens can maintain a good refractive correction effect in the central region, and at the same time, the introduction of peripheral defocus.

US2011051079 A1 discloses sets, kits or stocks of anti-myopia contact or spectacle lenses, along with methods for their use, that do not require a clinician to measure peripheral refractive error in the eyes of myopic patients. Extensive surveys have shown that lenses having peripheral powers or defocus set in accordance with central corrective power will cover almost all normal myopes not worse than -6D central refractive error. Sets, kits and stocks, as well as examples of lenses themselves, are disclosed together with methods of use.

EP3888894 A1 relates to micro lenses arrayed onto a single vision spectacle lens. The set of diffusing dots may be micro lenses, which are typically on the order of a tenth of a millimeter in diameter to about 1.1 millimeter in diameter, and about 1 micron in height. Refractive power is at the center of the lens, while the micro lenses form an array as the specific pattern.

WO2021069443 A1, on which the present invention is based, discloses in Fig. 1 a spectacle lens with a central optical region. Said central optical region is a circular region within a specified radius being equal to 9 mm. Outside of the central optical region, microstructures are arranged in a ring-shaped manner. The radial widths of the microstructures are specified in a range of 0.1 mm to 7 mm.

Some wearers of spectacle lenses with large lenslet diameter report of optical discomfort.

Therefore, it is an object of the present invention to present a spectacle lens providing a well balance between the wearability of the spectacle lens and the reduction of progression of myopia. Moreover, the manufacturing of the inventive spectacle lens comprising ring-shaped focusing structure should be ensured.

The problem is solved by a spectacle lens according to claim 1.

EP3888894 A1, on which the present invention is also based, discloses in Fig. 9 a spectacle lens with a central optical region. Outside of the central optical region, diffusing structures are arranged.

Some wearers of spectacle lenses with large diffusing structures report of optical discomfort.

Therefore, it is an object of the present invention to present a spectacle lens providing a well balance between the wearability of the spectacle lens and the reduction of progression of myopia. Moreover, the manufacturing of the inventive spectacle lens comprising ring-shaped diffusing structure should be ensured.

The problem is solved by a spectacle lens according to claim 1.

Advantageous embodiments and developments of the invention are the subject matter of the dependent claims.

The spectacle lens according to the invention comprises a plurality of ring-shaped focusing structures or a plurality of ring-shaped diffusing structures each having a respective width, and
a central clear zone having a central clear zone width within a range of 6 mm to 9.4 mm and said width being equal to or lower than 0.7 mm;

A spectacle lens in the context of the present invention is an ophthalmic lens worn in front of, but not in contact with, the eyeball (DIN ISO 13666:2019, section 3.5.2), where an ophthalmic lens is a lens intended to be used for purposes of measurement, correction and/or protection of the eye, or for changing its appearance (DIN ISO 13666:2019, section 3.5.1).

A structure shall be considered as ring-shaped if it surrounds a structure-free zone and there is a path within the structure which runs from a starting point within the structure around the structure-free zone and to the starting point again.

In the context of the present specification, the term "ring-shaped focusing structures" applies to structures providing a ring-shaped focal line as well as to structures comprising a plurality of lenslets adjoining each other such, that they form a ring of contiguously connected lenslets and providing a plurality of (e.g., equidistantly arranged and preferably mainly line-shaped or point-shaped) foci along a ring-shaped line. The term "ring shaped focusing structures" also comprises a cylindrical shape in the cross-section of the "ring shaped focusing structures" as shown in Fig. 14a and Fig. 14b and described in sections [102] of EP 3561578 A1. In other words, the term "ring shape focusing structures" also corresponds to a part of pure cylindrical concentric rings.

A structure providing a ring-shaped focal line is e.g., shown in Fig. 14a and Fig. 14b and described in sections [102] of EP 3561578 A1 as well as in Fig 11a and 11b, page 20, lines 10-12 of WO 2019166659 A1, respectively. Other variants of such structures providing a ring-shaped focal line are disclosed in Fig. 1 of CN111103701 B, in Fig. 5A and Fig. 5B of US 2019/0227342 A1.

In front view, i.e., if viewed perpendicular onto the front surface of the spectacle lens, the ring does not need to be circular, but also non-circular, in particular elliptical or otherwise curved rings such as e.g., shown in Fig. 1 of CN 213659117 U, are possible.

The lenslets do not need to be circular lenslets if viewed from the front view as described in the following. Exemplarily, such ring-shaped focusing structures may e.g., comprise structures similar to those described in WO 2019166659 A1, p. 17, I. 25 - p. 19, I. 8 with reference to Fig. 1 shown therein.

In the context of the present invention, the term "lenslet" refers either to a small convex structure in the approximately spherical, ellipsoidal, sinusoidal or similar shape of a lens that is provided on a surface of a spectacle lens and has lateral dimensions that are several orders of magnitude smaller than the dimensions of the spectacle lens itself, or to a small area with a refractive index distribution that is provided in a spectacle lens body where the refractive index distribution has lateral dimensions that are at least a plurality of orders of magnitude smaller than the dimensions of the spectacle lens itself.

In case of the lenslets being small convex structures, lenslets are considered to adjoin each other in case there is a path between the centers of two lenslets that does not pass an area having solely the shape of the surface on which the lenslets are formed. In case of the lenslets being refractive index distributions, lenslets are considered to adjoin each other in case there is a path between the centers of two lenslets that does not pass an area having the refractive index of the spectacle lens body.

In optics, diffusing structures (also called a light diffuser or optical diffuser) constitute an optical element that is made of any material that diffuses or scatters light in some manner to transmit soft light. Diffuse light can be easily obtained by reflecting light from a white surface, while more compact diffusing structures may use translucent material, including ground glass, Teflon, holographs, opal glass, and greyed glass. Scattering may be achieved by scattering centers which may be point-shaped, examples of which are, e.g., disclosed in WO 2010/075319 A2, WO 2018/026697 A1, WO 2019/152438 A1 and WO 2020/014613 A1, respectively

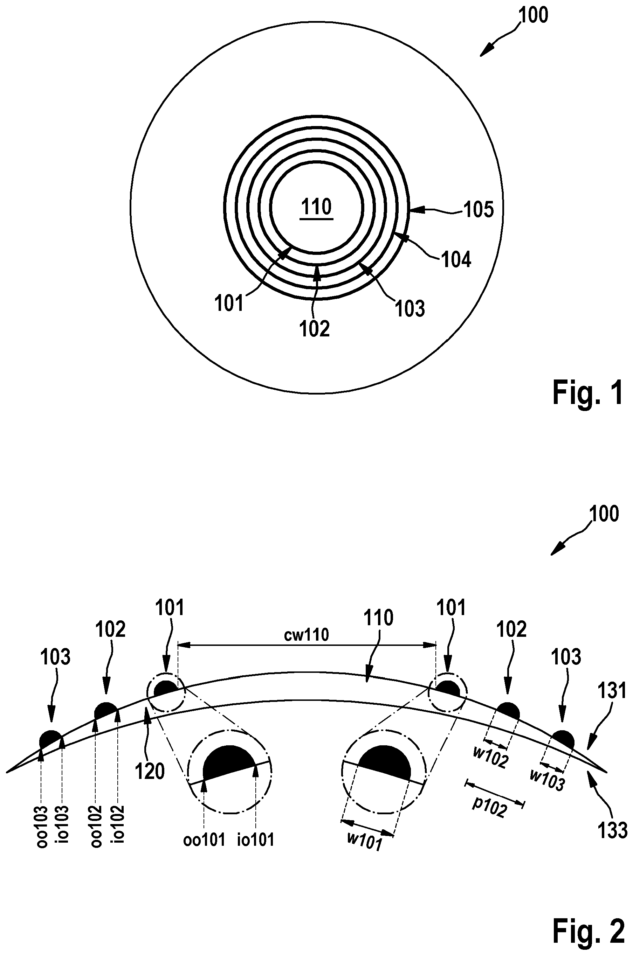

The term "width of a ring-shaped focusing structure" designates an expansion of a ring-shaped focusing structure perpendicular to its circumferential direction as measured from its inner and outer onsets. Analogously, "width of a ring-shaped diffusing structure" designates an expansion of a ring-shaped diffusing structure perpendicular to its circumferential direction as measured from its inner and outer onsets. The term "onset" represents the first measurable position of a ring-shaped focusing structure or a ring-shaped diffusing structure on a surface of a spectacle lens. In other words, the term "onset" represents a position on the surface of the spectacle lens on which the surface shape starts to deviate from the shape of the base lens surface in case of the focusing structures or on which the contrast-reducing properties of the lens change with respect to the base lens in case of the diffusing structures. Exemplary embodiments of determining the onset are shown in Figures 2, 4 and 6. Further, the term "inner onset" specifies the onset on the side of the structure towards the center of the lens and the term "outer onset" specifies the onset of the structure away from the lens towards the periphery.

In the context of the present specification, the term "clear zone" applies to a structure-free zone of a spectacle lens. It is designed such that it shall neither provide a myopic defocus nor a diffusion in foveal vision when a wearer looks through the clear zone with the spectacle lens being positioned according the specified as-worn position. Furthermore, a clear zone may allow for achieving, if required assisted by accommodation, a focused image on the fovea.

A central clear zone is a structure-free zone which is neighbored and surrounded by a ring-shaped focusing structure.

The optical center (DIN ISO 13666:2019, section 3.2.15) of a single vision lens in general is located within the central clear zone. Progressive spectacle lenses may comprise more than one, in particular two central clear zones located e.g., in near portion (DIN ISO 13666:2019, Sec. 3.15.3) and far portion (DIN ISO 13666:2019, section 3.15.1).

A "clear zone width" is a maximum expansion of the onset of the innermost ring-shaped focusing structure or as the case may be a maximum expansion of the onset of the innermost ring-shaped diffusing structure.

A central clear zone with a central clear zone width within a range of 6 mm to 9.4 mm has the advantage that a small clear zone e.g., 6 mm increases the probable efficacy of the spectacle lens for the reduction of progression of myopia for the wearer. At the same time said small clear zone decreases the acceptance of the spectacle lens by the wearer due to the decreased comfort of wearability of the spectacle lens. A large clear zone e.g., 9.4 mm decreases the probable efficacy of the spectacle lens for the reduction of progression of myopia for the wearer. At the same time said large clear zone increases the acceptance of the spectacle lens by the wearer due to the increased comfort of wearability of the spectacle lens.

The term "fill factor" must be subdivided into "length-based fill factor" and "surface-based fill factor". The length-based fill factor is used for determining the fill factor of a circular-shaped focusing or diffusing structure. Whereas the surface-based fill factor is used for determining the fill factor of a ring-shaped focusing or diffusing structure.

The length-based fill factor is defined as the ratio of the width of the inner circular-shaped focusing structure adjacent to a clear zone ("width") and the radial distance between the inner circular-shaped focusing structure and the neighboring circular-shaped focusing structure ("pitch"):

$$\text{length based fill factor} = \frac{\text{width}}{\text{pitch}}$$

A "pitch" is a distance between an onset of two neighboring circular-shaped focusing or diffusing structures.

The length-based fill-factor has the advantage to define the balance between the wearability and the manufacturing of the inventive spectacle lens comprising circular-shaped focusing or diffusing structures. A length-based fill factor greater than 60 % results in a decrease of comfortable wearability of the spectacle lens but increases the probable efficacy of the spectacle lens for the reduction of progression of myopia for the wearer. A length-based fill factor smaller than 40 % results in a decrease of the probable efficacy of the spectacle lens for the reduction of progression of myopia for the wearer but increases the comfortable wearability of the spectacle lens. In other words, a well-defined balance between the wearability and the manufacturing of the inventive spectacle lens is achieved with a length-based fill factor in the range of 40 % to 60 %. In particular, a length-based fill factor of 50 % is preferred.

The surface-based fill factor is determined by the surface area ratio of the surface area of the innermost one or more ring-shaped focusing structure or the innermost one or more ring-shaped diffusing structure and a sum of said surface area of said innermost one or more ring-shaped focusing structure or said innermost one or more ring-shaped diffusing structure and the area of a peripheral clear zone. The term "innermost" describes the closest ring-shaped focusing structure or ring-shaped diffusing structure to the central clear zone. The term "peripheral clear zone" refers to the first clear zone next to central clear zone.

The surface area of the innermost one or more ring-shaped focusing structure or the innermost one or more ring-shaped diffusing structure is determined by an inner onset line and an outer onset line of said innermost one or more ring-shaped focusing structure or said innermost one or more ring-shaped diffusing structure. The inner onset line passes along the inner onset of the innermost one or more ring-shaped focusing structure or the innermost one or more ring-shaped diffusing structure, said inner onset line surrounds the central clear zone. The outer onset line passes along the outer onset of the innermost one or more ring-shaped focusing structure or the innermost one or more ring-shaped diffusing structure, said outer onset line is surrounded by the peripheral clear zone. The inner onset line and the outer onset line of the innermost one or more ring-shaped focusing structure or the innermost one or more ring-shaped diffusing structure are enclosing a surface area along the surface of the base spectacle lens without structures, said surface area is the surface area of the innermost one or more ring-shaped focusing structure or the innermost one or more ring-shaped diffusing structure.

The surface area of the peripheral clear zone is determined by the outer onset line of the innermost one or more ring-shaped focusing structure or the innermost one or more ring-shaped diffusing structure and the inner onset line of a neighboring one or more ring-shaped focusing structure or a neighboring one or more ring-shaped diffusing structure. The inner onset line of the neighboring one or more ring-shaped focusing structure or the neighboring one or more ring-shaped diffusing structure passes along the inner onset of the neighboring one or more ring-shaped focusing structure or neighboring one or more ring-shaped diffusing structure, said inner onset line surrounds the peripheral clear zone.

The outer onset line of the innermost one or more ring-shaped focusing structure or the innermost one or more ring-shaped diffusing structure and the inner onset line of the neighboring one or more ring-shaped focusing structure or the neighboring one or more ring-shaped diffusing structure enclosing a surface area along the spectacle lens, said surface area is the surface area of the peripheral clear zone. The surface-based fill-factor has the advantage to define the balance between the wearability and the manufacturing of the inventive spectacle lens comprising ring-shaped focusing or diffusing structures. A surface-based fill factor greater than 59.2% results in a decrease of comfortable wearability of the spectacle lens but increases the probable efficacy of the spectacle lens for the reduction of progression of myopia for the wearer. A surface-based fill factor smaller than 56.1% results in a decrease of the probable efficacy of the spectacle lens for the reduction of progression of myopia for the wearer but increases the comfortable wearability of the spectacle lens. According to the invention, a well-defined balance between the wearability and the manufacturing of the inventive spectacle lens is achieved with a surface-based fill factor in the range of 34.6% to 59.2% or of 46.4% to 47.7%.

The above described problem is fully solved by a spectacle lens described in the forgoing. Since the intended wearers are children, the higher level of comfort and wearability prevent the children from removing the spectacle lenses.

Preferred embodiments of a spectacle lens designed according to the inventive concept may be characterized in that said width(s) of said ring-shaped focusing structures or said ring-shaped diffusing structures is (are) within at least one range of the following group of ranges:

(i) said width is larger than 0.2 mm and equal or lower than 0.7 mm;
(ii) said width is larger than 0.3 mm and equal or lower than 0.7 mm;
(iii) said width is equal or lower than 0.6 mm;
(iv) said width is larger than 0.2 mm and equal or lower than 0.6 mm;
(v) said width is larger than 0.3 mm and equal or lower than 0.6 mm;
(vi) said width is equal or lower than 0.5 mm;
(vii) said width is larger than 0.2 mm and equal or lower than 0.5 mm;
(viii) said width is larger than 0.3 mm and equal or lower than 0.5 mm.

The advantage consists in a well-defined balance between the wearability and the manufacturing of the inventive spectacle lens. A decrease of the width of a ring-shaped structure leads to a more comfortable wearability of the spectacle lens. An increase of the width of a ring-shaped structure enables easier manufacturing of the spectacle lens.

In another preferred embodiment of the invention the spectacle lens is characterized having a central clear zone width within at least one range of the following group of ranges:

(i) said central clear zone width is larger than 6 mm and lower or equal than 7 mm;

(ii) said central clear zone width is larger than 7 mm and lower or equal than 9.4 mm.

A central clear zone with a central clear zone width within a range of 6 mm to 7 mm has the advantage that a small clear zone e.g., 6 mm increases the probable efficacy of the spectacle lens for the reduction of progression of myopia for the wearer. At the same time said small clear zone decreases the acceptance of the spectacle lens by the wearer due to the decreased comfort of wearability of the spectacle lens. A central clear zone with a central clear zone width within a range of 7 mm to 9.4 mm has the advantage that a large clear zone e.g., 9.4 mm increases the acceptance of the spectacle lens by the wearer due to the increased comfort of wearability of the spectacle lens.

Another advantageous embodiment of a spectacle lens according to the present invention is characterized in that said one or more ring-shaped focusing structures provide an additional power as compared to said central clear zone within at least one range of the following group of ranges:

(i) said additional power is larger than 6 diopter and equal or lower than 12 diopter;

(ii) said additional power is larger than 7 diopter and equal or lower than 11 diopter;

(iii) said additional power is larger than 8 diopter and equal or lower than 10 diopter.

In the context of the present specification, the term "additional power" applies to a focal power that is added to the focal power of a spectacle lens in at least one meridian, where the focal power of a spectacle lens provides, assisted by accommodation, a focused image on the fovea and the additional power, when added to the focal power of a spectacle lens, provides for a myopic defocus. The additional power must not be confused with the addition power of a progressive addition lens.

The term "Focal power" is a collective term for the spherical vertex power, which brings a paraxial pencil of parallel light to a single focus (and which is usually considered in the prescription by the "sphere" value or, abbreviated, "sph", and the cylindrical vertex power of a spectacle lens, which brings a paraxial pencil of parallel light to two separate line foci mutually at right angles (DIN ISO 13666:2019, section 3.10.2) and which is usually considered in the prescription by the "cylinder" value or, abbreviated, "cyl".

The advantage of this further advantageous embodiment is to define the balance between the wearability and the manufacturing of the inventive spectacle lens. An additional power between 10 and 12 diopter increases the probable efficacy of the spectacle lens for the reduction of progression of myopia for the wearer. An additional power between 6 and 8 diopter increases the comfortable wearability of the spectacle lens. In other words, a well-defined balance between the wearability and the manufacturing of the inventive spectacle lens is achieved with an additional power in the range of 6 diopter to 8 diopter. In particular an additional power of 10 diopter is preferred.

The spectacle lens according to the invention is also in the form of computer-readable data and of a data carrier signal as defined in claims 7 and 8, respectively.

The invention also concerns a data carrier according to claim 9.

The invention will be described exemplarily in the following with reference to the drawings.

Fig. 1 shows a single vision spectacle lens according to a first embodiment of the present invention with a plurality of ring-shaped focusing structures.

Fig. 2 shows a cross-sectional view of the single vision spectacle lens according to Fig. 1 in order to demonstrate how to determine the width of a ring-shaped focusing structure, the pitch of two neighboring ring-shaped focusing structures and the central clear zone width.

Fig. 3 shows a coated single vision spectacle lens according to a second embodiment of the present invention with a plurality of ring-shaped focusing structures.

Fig. 4 shows a cross-sectional view of the single vision spectacle lens according to Fig. 3 in order to demonstrate how to determine the width of a ring-shaped focusing structure, the pitch of two neighboring ring-shaped focusing structures and the central clear zone in the presence of a coating.

Fig. 5 shows a single vision spectacle lens according to a third embodiment of the present invention with a plurality of ring-shaped diffusing structures.

Fig. 6 shows a cross-sectional view of a single vision spectacle lens according to Fig. 5 in order to demonstrate how to determine the width of a ring-shaped diffusing structure, the pitch of two neighboring ring-shaped diffusing structures and the central clear zone width.

Fig. 7 shows a single vision spectacle lens according to a fourth embodiment of the present invention with a plurality of ring-shaped focusing structures.

Fig. 8 shows a single vision spectacle lens according to a fifth example not forming part of the claimed invention with a plurality of ring-shaped focusing structures.

Fig. 9 shows a single vision spectacle lens according to a sixth example not forming part of the claimed invention with a plurality of ring-shaped focusing structures.

Fig. 10 shows a progressive spectacle lens example not forming part of the claimed invention with a plurality of ring-shaped focusing structures.

Fig. 11 shows a single vision spectacle lens example not forming part of the claimed invention with a plurality of ring-shaped focusing structures, wherein the focusing structures consist of a plurality of contigouously connected lenslets.

A first exemplary embodiment of the present invention is described with respect to Figure 1 and Figure 2 which show a single vision spectacle lens 100. The single vision spectacle lens 100 comprises a central clear zone 110. The central clear zone 110 in this embodiment has a focal power being designed for the correction of an existing myopia of the wearer. In the present exemplary embodiment, the single vision spectacle lens 100 comprises additionally five circular-shaped focusing structures 101 to 105 of equal cross-section. Circular-shaped means ring-shaped with a circular contour in front view.

The circular-shaped focusing structures 101 to 105 are formed such that an additional focal power of 12 diopters is provided as compared to the focal power of the central clear zone 110. This additional focal power is recognized by the wearer as blur and is demonstrated e.g. in Li X, Ding C, Li Y, Lim EW, Gao Y, Fermigier B, Yang A, Chen H, Bao J. Influence of Lenslet Configuration on Short-Term Visual Performance in Myopia Control Spectacle Lenses. Frontiers in Neuroscience 2021. This additional focal power leads to a reduction of progression of myopia of the wearer.

The single vision spectacle lens 100 shown in Figures 1 and 2 has a diameter of 7 cm. Therefore, the lens 100 of Figure 1 requires an edging process in order, to fit into a respective spectacle frame. The single vision spectacle lens 100 comprises five circular-shaped focusing structures 101 to 105. Said circular-shaped focusing structures 101 to 105 are concentrically arranged towards the optical center of the single vision spectacle lens 100. Moreover, the circular-shaped focusing structure 101 is surrounding the central clear zone 110 having a circular central clear zone width cw110 of 7.0 mm. The width w101 of the circular-shaped focusing structure 101 is 0.5 mm. The neighboring circular-shaped structure 102 is arranged concentrically to the inner circular-shaped structure 101, encircling the circular central clear zone 110, with a pitch p101 of 1.0 mm. The ratio of the width w101 and the pitch p101 results in a length-based fill factor of 50.0% and a surface-based fill factor of 46.9%.

Figure 2 shows a cross-sectional view of the single vision spectacle lens 100. The front surface 131 and the back surface 133 of the single vision spectacle lens 100 are spherically shaped. Within the scope of this invention the shape of the front surface 131 and the back surface 133 of the single vision spectacle lens 100 is not limited to a spherical shape, it also can be of aspherical, toroidal, atoric or even be freely formed in order to comply with wearer's individual needs.

Figure 2 demonstrates how to determine the inner onset io101 of a circular-shaped focusing structure 101 and the outer onset oo101 of a circular-shaped focusing structure 101, the width of a circular-shaped focusing structure w101 to w103, the pitch of two neighboring circular-shaped focusing structures p101 and the central clear zone width cw110. For simplicity reasons only the three circular-shaped focusing structures 101 to 103 are shown in Figure 2 compared to the five circular-shaped focusing structures 101 to 105 shown in Figure 1.

The determination of an inner onset and an outer onset of a circular-shaped focusing structure is explained exemplary for the circular-shaped focusing structure 101. The inner onset io101 of the circular-shaped focusing structure 101 is a point directly adjacent to the central clear zone 110. The outer onset oo101 of the circular-shaped focusing structure 101 is a point radially arranged to the inner onset io101 and directly adjacent to the peripheral clear zone 120.

The width w101 of the circular-shaped focusing structure 101 is the radial distance between the inner onset io101 and the outer onset oo101. The width w102 and w103 are determined accordingly with the inner onsets io102, io103 and the outer onsets oo102, oo103.

The pitch p101 of the circular-shaped focusing structure 101 is the radial distance between the inner onset io101 of the circular-shaped focusing structure 101 and the inner onset io102 of the circular-shaped focusing structure 102. The pitch w102 is determined accordingly with the inner onsets io102 and io103.

The central clear zone width cw110 of the single vision spectacle lens 100 is the diameter of the central clear zone 110.

The single vision lens 100 according to the first embodiment of Figure 1 and 2 discloses a central clear zone width cw110 which results in a better acceptance response of the wearer compared to the prior-art. Moreover, the length-based fill factor lf101 and the pitch p101 are designed such that, compared to the prior-art, a better comfort and acceptance response of the wearer is achieved.

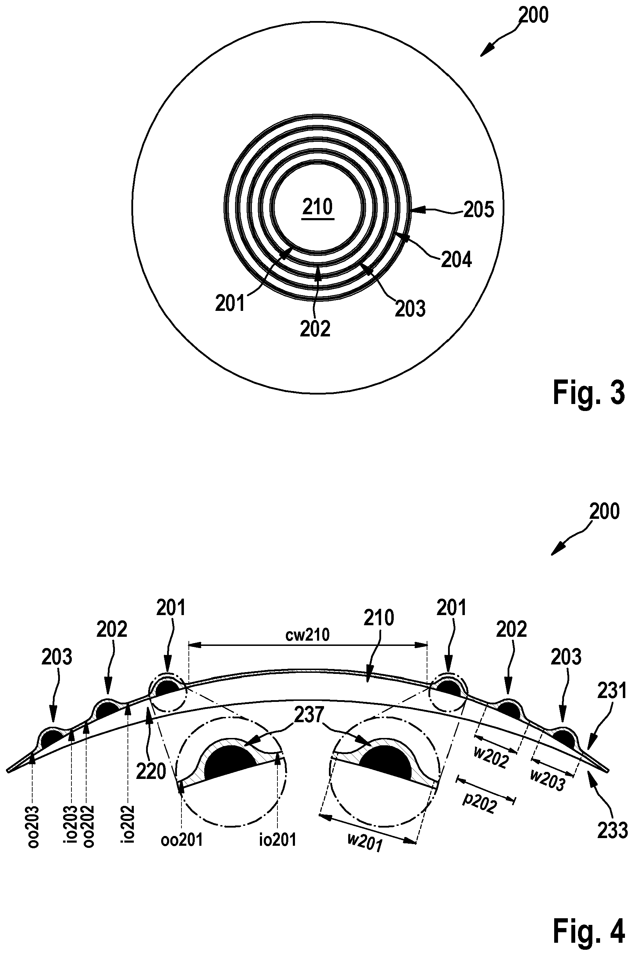

A second exemplary embodiment of the present invention is described with respect to Figure 3 and Figure 4 which show a coated single vision spectacle lens 200. The coated single vision spectacle lens 200 comprises a coated central clear zone 210. The coated central clear zone 210 in this embodiment has a focal power being designed for the correction of an existing myopia of the wearer. In the present exemplary embodiment, the coated single vision spectacle lens 200 comprises additional five coated circular-shaped focusing structures 201 to 205 of equal cross-section. Circular-shaped means ring-shaped with a circular contour if viewed from front.

The coated circular-shaped focusing structures 201 to 205 are formed such that an additional focal power of 12 diopters is provided as compared to the focal power of the coated central clear zone 210. This additional focal power is recognized by the wearer as blur and is demonstrated e.g., in Li X, Ding C, Li Y, Lim EW, Gao Y, Fermigier B, Yang A, Chen H, Bao J. Influence of Lenslet Configuration on Short-Term Visual Performance in Myopia Control Spectacle Lenses. Frontiers in Neuroscience 2021. This additional focal power leads to a reduction of progression of myopia of the wearer.

The coated single vision spectacle lens 200 shown in Figures 3 and 4 has a diameter of 7 cm. Therefore, the lens 200 of Figure 3 requires an edging process in order, to fit into a respective spectacle frame. The coated single vision spectacle lens 200 comprises five coated circular-shaped focusing structures 201 to 205. Said coated circular-shaped focusing structures 201 to 205 are concentrically arranged towards the optical center of the coated single vision spectacle lens 200. Moreover, the coated circular-shaped focusing structure 201 is surrounding the coated central clear zone 210 having a coated circular central clear zone width cw210 of 7.0 mm. The width w201 of the coated circular-shaped focusing structure 201 is 0.5 mm. The neighboring coated circular-shaped structure 202 is arranged concentrically to the inner coated circular-shaped structure 201, encircling the coated circular central clear zone 210, with a pitch p201 of 1.0 mm. The ratio of the width w201 and the pitch p201 results in a length-based fill factor of 50.0% and a surface-based fill factor of 46.9%.

Figure 4 shows a cross-sectional view of the coated single vision spectacle lens 200. The coated front surface 231 and the back surface 233 of the single vision spectacle lens 200 are spherically shaped. Within the scope of this invention the shape of the coated front surface 231 and the back surface 233 of the coated single vision spectacle lens 200 is not limited to a spherical shape, it also can be of aspherical, toroidal or even be freely formed in order, to comply with wearer's individual needs.

Figure 4 demonstrates how to determine the inner onset io201 of a coated circular-shaped focusing structure 201 and the outer onset oo201 of a coated circular-shaped focusing structure 201, the width of a coated circular-shaped focusing structure w201 to w203, the pitch of two neighboring circular-shaped focusing structures p201 and the central clear zone width cw210. For simplicity reasons only the three coated circular-shaped focusing structures 201 to 203 are shown in Figure 4 compared to the shown five coated circular-shaped focusing structures 201 to 205 in Figure 3.

The determination of an inner onset and an outer onset of a coated circular-shaped focusing structure is explained exemplary for the coated circular-shaped focusing structure 201. The inner onset io201 of the coated circular-shaped focusing structure 201 represents the first measurable inner position (measured from the optical center of the spectacle lens) of the coated ring-shaped focusing structure 201 on the surface of the spectacle lens. In other words, the inner onset io201 represents the position on the surface of the spectacle lens on which the surface shape of the coated focusing structure starts to deviate from the shape of the base lens surface. In Figure 4 said first deviation and thus the inner onset io201 is at the point when the coating 237 is not parallel anymore to the shape of the front surface 231.

The outer onset oo201 of the coated circular-shaped focusing structure 201 represents the first measurable outer position (measured from the optical center of the spectacle lens) of the coated ring-shaped focusing structure 201 on the surface of a spectacle lens. In other words, the outer onset oo201 represents the position on the surface of the spectacle lens on which the surface shape of the coated focusing structure starts to deviate from the shape of the base lens surface. In Figure 4 said first deviation and therefore also the outer onset oo201 is at the point when the coating 237 is parallel to the shape of the front surface 231.

The width w201 of the coated circular-shaped focusing structure 201 is the radial distance between the inner onset io201 and the outer onset oo201. The width w202 and w203 are determined accordingly with the inner onsets io202, io203 and the outer onsets oo202, oo203.

The pitch p201 of the coated circular-shaped focusing structure 201 is the radial distance between the inner onset io201 of the coated circular-shaped focusing structure 201 and the inner onset io202 of the coated circular-shaped focusing structure 202. The pitch w202 is determined accordingly with the inner onsets io202 and io203.

The central clear zone width cw210 of the coated single vision spectacle lens 200 is the diameter of the coated central clear zone 210.

The coated single vision lens 200 according to the first embodiment of Figure 3 and 4 discloses a central clear zone width cw210 which results in a better acceptance response of the wearer compared to the prior-art. Moreover, the length-based fill factor lf201 and the pitch p201 are designed such that compared to the prior-art a better comfort and acceptance response of the wearer is achieved.

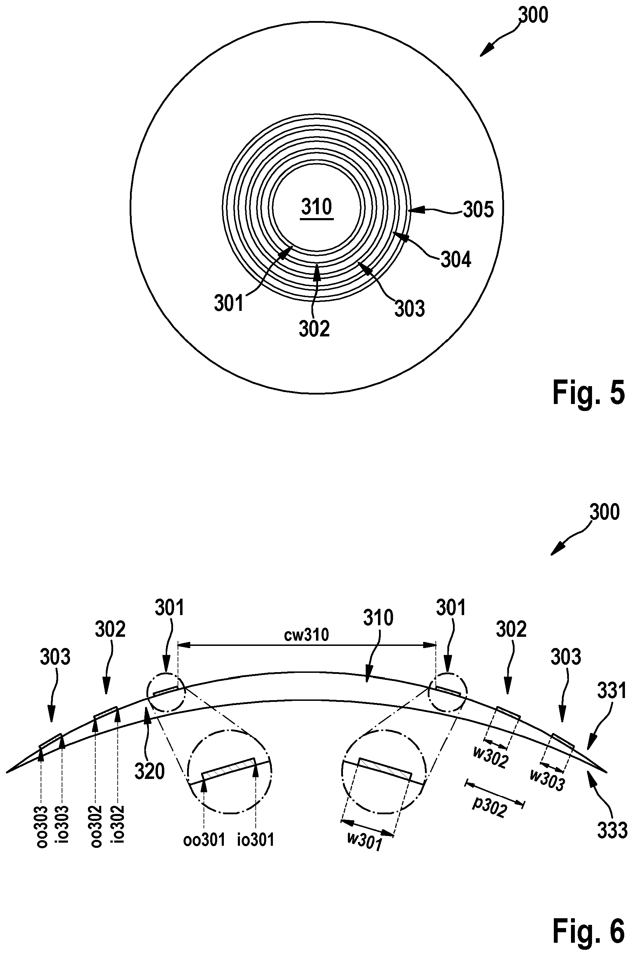

A third exemplary embodiment of the present invention is described with respect to Figure 5 and Figure 6 which show a single vision spectacle lens 300. The single vision spectacle lens 300 comprises a central clear zone 310. The central clear zone 310 in this embodiment has a focal power being designed for the correction of an existing myopia of the wearer. In the present exemplary embodiment, the single vision spectacle lens 300 comprises additional five circular-shaped diffusing structures 301 to 305 of equal cross-section. Circular-shaped means ring-shaped with a circular contour if viewed from front.

The circular-shaped diffusing structures 301 to 305 are formed such that the visual acuity of the wearer is reduced by 0.1 to 0.2 logMAR. Hence, said circular-shaped diffusing structures 301 to 305 lead to a diffusion and/or scattering of light.

The single vision spectacle lens 300 shown in Figures 5 and 6 has a diameter of 7 cm. Therefore, the lens 300 of Figure 5 requires an edging process in order, to fit into a respective spectacle frame. The single vision spectacle lens 300 comprises five circular-shaped diffusing structures 301 to 305. Said circular-shaped diffusing structures 301 to 305 are concentrically arranged towards the optical center of the single vision spectacle lens 300. Moreover, the circular-shaped diffusing structure 301 is surrounding the central clear zone 310 having a circular central clear zone width cw310 of 7.0 mm. The width w301 of the circular-shaped diffusing structure 301 is 0.5 mm. The neighboring circular-shaped structure 302 is arranged concentrically to the inner circular-shaped structure 301, encircling the circular central clear zone 310, with a pitch p301 of 1.0 mm. The ratio of the width w301 and the pitch p301 results in a length-based fill factor of 50.0% and a surface-based fill factor of 46.9%.

Figure 6 shows a cross-sectional view of the single vision spectacle lens 300. The front surface 331 and the back surface 333 of the single vision spectacle lens 300 are spherically shaped. Within the scope of this invention the shape of the front surface 331 and the back surface 333 of the single vision spectacle lens 300 is not limited to a spherical shape, it also can be of aspherical, toroidal, atoric or even be freely formed in order, to comply with wearer's individual needs.

Figure 6 demonstrates how to determine the inner onset io301 of a circular-shaped diffusing structure 301 and the outer onset oo301 of a circular-shaped diffusing structure 301, the width of a circular-shaped diffusing structure w301 to w303, the pitch of two neighboring circular-shaped diffusing structures p301 and the central clear zone width cw310. For simplicity reasons only the three circular-shaped diffusing structures 301 to 303 are shown in Figure 6 compared to the shown five circular-shaped diffusing structures 301 to 305 in Figure 5.

The determination of an inner onset and an outer onset of a circular-shaped diffusing structure is explained exemplary for the circular-shaped diffusing structure 301. The inner onset io301 of the circular-shaped diffusing structure 301 is a point directly adjacent to the central clear zone 310. The outer onset oo301 of the circular-shaped diffusing structure 301 is a point radially arranged to the inner onset io301 and directly adjacent to the peripheral clear zone 320.

The width w301 of the circular-shaped diffusing structure 301 is the radial distance between the inner onset io301 and the outer onset oo301. The width w302 and w303 are determined accordingly with the inner onsets io302, io303 and the outer onsets oo302, oo303.

The pitch p301 of the circular-shaped diffusing structure 301 is the radial distance between the inner onset io301 of the circular-shaped diffusing structure 301 and the inner onset io302 of the circular-shaped diffusing structure 302. The pitch w302 is determined accordingly with the inner onsets io302 and io303.

The central clear zone width cw310 of the single vision spectacle lens 300 is the diameter of the central clear zone 310.

The single vision lens 300 according to the third embodiment of Figure 5 and 6 discloses a central clear zone width cw310 which results in a better acceptance response of the wearer compared to the prior-art. Moreover, the length-based fill factor lf301 and the pitch p301 are designed such that compared to the prior-art, a better comfort and acceptance response of the wearer is achieved.

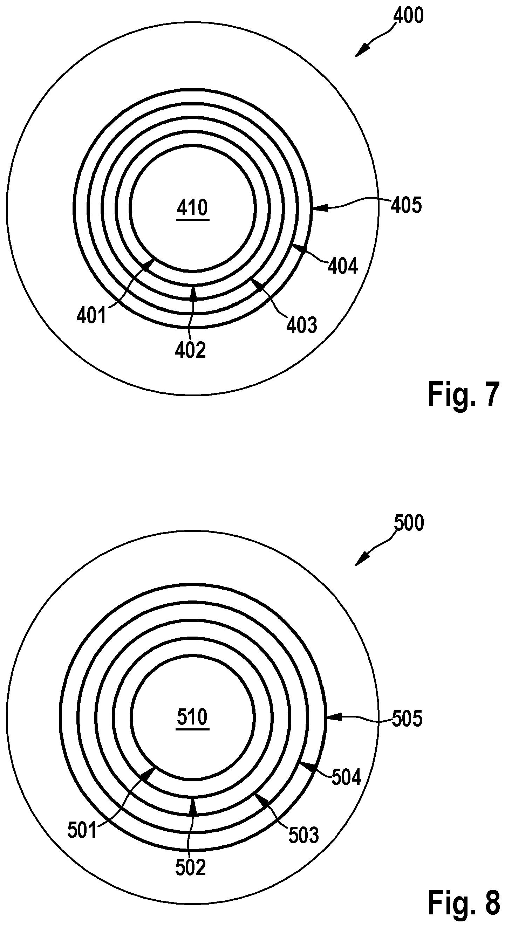

A fourth exemplary embodiment of the present invention is described with respect to Figure 7 which shows a single vision spectacle lens 400. The single vision spectacle lens 400 comprises a central clear zone 410. The central clear zone 410 in this embodiment has a focal power being designed for the correction of an existing myopia of the wearer. In the present exemplary embodiment, the single vision spectacle lens 400 comprises additional five circular-shaped focusing structures 401 to 405 of equal cross-section. Circular-shaped means ring-shaped with a circular contour if viewed from front.

The circular-shaped focusing structures 401 to 405 are formed such that an additional focal power of 8 diopters is provided as compared to the focal power of the central clear zone 410. This additional focal power is recognized by the wearer as blur and is demonstrated e.g., in Li X, Ding C, Li Y, Lim EW, Gao Y, Fermigier B, Yang A, Chen H, Bao J. Influence of Lenslet Configuration on Short-Term Visual Performance in Myopia Control Spectacle Lenses. Frontiers in Neuroscience 2021. This additional focal power leads to a reduction of progression of myopia of the wearer.

The single vision spectacle lens 400 shown in Figure 7 has a diameter of 7 cm. Therefore, the lens 400 of Figure 7 requires an edging process in order, to fit into a respective spectacle frame. The single vision spectacle lens 400 comprises five circular-shaped focusing structures 401 to 405. Said circular-shaped focusing structures 401 to 405 are concentrically arranged towards the optical center of the single vision spectacle lens 400. Moreover, the circular-shaped focusing structure 401 is surrounding the central clear zone 410 having a circular central clear zone width cw410 of 9.4 mm. The width w401 of the circular-shaped focusing structure 401 is 0.5 mm. The neighboring circular-shaped structure 402 is arranged concentrically to the inner circular-shaped structure 401, encircling the circular central clear zone 410, with a pitch p401 of 1.2 mm. The ratio of the width w401 and the pitch p401 results in a length-based fill factor of 41.7% and a surface-based fill factor of 38.9%.

The single vision lens 400 according to the fourth embodiment of Figure 7 discloses a wider central clear zone width cw410 compared to central clear zone width cw110 of the first embodiment of Figure 1, which results in a better acceptance response of the wearer. Moreover, the length-based fill factor lf401 and the pitch p401 are designed such that compared to the first embodiment of Figure 1, a better comfort and acceptance response of the wearer is achieved.

A fifth example not falling under the scope of the claimed invention is described with respect to Figure 8 which shows a single vision spectacle lens 500. The single vision spectacle lens 500 comprises a central clear zone 510. The central clear zone 510 in this example has a focal power being designed for the correction of an existing myopia of the wearer. In the present example, the single vision spectacle lens 500 comprises additional five circular-shaped focusing structures 501 to 505 of equal cross-section. Circular-shaped means ring-shaped with a circular contour if viewed from front.

The circular-shaped focusing structures 501 to 505 are formed such that an additional focal power of 10 diopters is provided as compared to the focal power of the central clear zone 510. This additional focal power is recognized by the wearer as blur and is demonstrated e.g., in Li X, Ding C, Li Y, Lim EW, Gao Y, Fermigier B, Yang A, Chen H, Bao J. Influence of Lenslet Configuration on Short-Term Visual Performance in Myopia Control Spectacle Lenses. Frontiers in Neuroscience 2021. This additional focal power leads to a reduction of progression of myopia of the wearer.

The single vision spectacle lens 500 shown in Figure 8 has a diameter of 7 cm. Therefore, the lens 500 of Figure 8 requires an edging process in order, to fit into a respective spectacle frame. The single vision spectacle lens 500 comprises five circular-shaped focusing structures 501 to 505. Said circular-shaped focusing structures 501 to 505 are concentrically arranged towards the optical center of the single vision spectacle lens 500. Moreover, the circular-shaped focusing structure 501 is surrounding the central clear zone 510 having a circular central clear zone width cw510 of 9.4 mm. The width w501 of the circular-shaped focusing structure 501 is 0.5 mm. The neighboring circular-shaped structure 502 is arranged concentrically to the inner circular-shaped structure 501, encircling the circular central clear zone 510, with a pitch p501 of 1.5 mm. The ratio of the width w501 and the pitch p501 results in a length-based fill factor of 33.3% and a surface-based fill factor of 30.3%.

The single vision lens 500 according to the example of Figure 8 discloses a wider central clear zone width cw510 compared to central clear zone width cw110 of the first embodiment of Figure 1, which results in a better acceptance response of the wearer. Moreover, the length-based fill factor lf501 and the pitch p501 are designed such that compared to the first embodiment of Figure 1 a better comfort and acceptance response of the wearer is achieved.

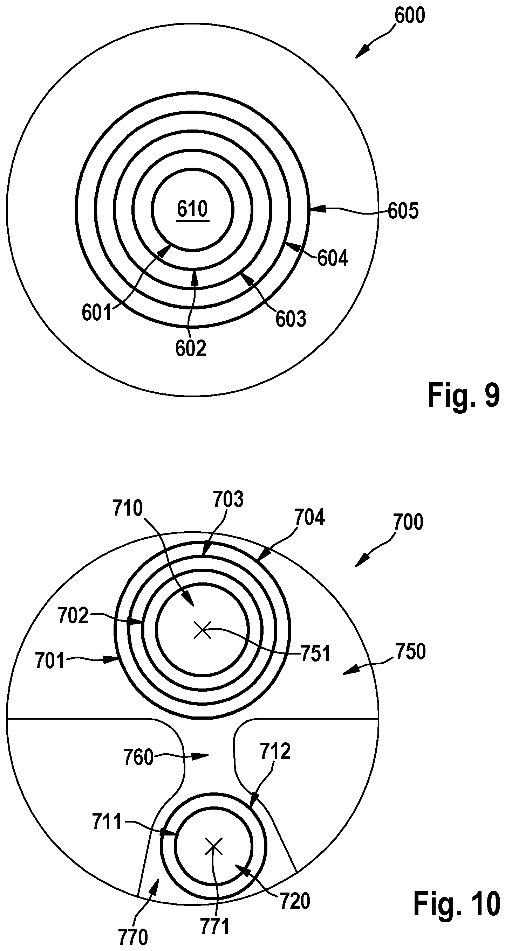

A sixth example not falling under the scope of the claimed invention is described with respect to Figure 9 which shows a single vision spectacle lens 600. The single vision spectacle lens 600 comprises a central clear zone 610. The central clear zone 610 in this example has a focal power being designed for the correction of an existing myopia of the wearer. In the present example, the single vision spectacle lens 600 comprises additional five circular-shaped focusing structures 601 to 605 of equal cross-section. Circular-shaped means ring-shaped with a circular contour if viewed from front.

The circular-shaped focusing structures 601 to 605 are formed such that an additional focal power of 12 diopters is provided as compared to the focal power of the central clear zone 610. This additional focal power is recognized by the wearer as blur and is demonstrated e.g., in Li X, Ding C, Li Y, Lim EW, Gao Y, Fermigier B, Yang A, Chen H, Bao J. Influence of Lenslet Configuration on Short-Term Visual Performance in Myopia Control Spectacle Lenses. Frontiers in Neuroscience 2021. This additional focal power leads to a reduction of progression of myopia of the wearer.

The single vision spectacle lens 600 shown in Figure 9 has a diameter of 7 cm. Therefore, the lens 600 of Figure 9 requires an edging process in order, to fit into a respective spectacle frame. The single vision spectacle lens 600 comprises five circular-shaped focusing structures 601 to 605. Said circular-shaped focusing structures 601 to 605 are concentrically arranged towards the optical center of the single vision spectacle lens 600. Moreover, the circular-shaped focusing structure 601 is surrounding the central clear zone 610 having a circular central clear zone width cw610 of 6.0 mm. The width w601 of the circular-shaped focusing structure 601 is 0.5 mm. The neighboring circular-shaped structure 602 is arranged concentrically to the inner circular-shaped structure 601, encircling the circular central clear zone 610, with a pitch p601 of 1.7 mm. The ratio of the width w601 and the pitch p601 results in a length-based fill factor of 29.4% and a surface-based fill factor of 25.8%.

The single vision lens 600 according to the example of Figure 9 discloses a narrower central clear zone width cw610 compared to central clear zone width cw110 of the first embodiment of Figure 1, which results in smaller area for myopia correction. However, the length-based fill factor lf601 and the pitch p601 are designed such that compared to the first embodiment of Figure 1, a better comfort and acceptance response of the wearer is achieved.

Another example not falling under the scope of the claimed invention is described with respect to Figure 10 which shows a progressive spectacle lens 700. The progressive spectacle lens 700 comprises a distance portion 750, a corridor 760 and a near portion 770. Figure 10 shows circular-shaped focusing structures 701 to 705 in the distance portion 750 as well as circular-shaped focusing structures 711 and 712 in the near portion 770.

The distance portion 750 comprises four circular-shaped focusing structures 701 to 704. Said structures are concentrically arranged towards the distance reference point 751. The distance reference point 751 is the point on the front surface of the spectacle lens at which the verification power 753 for the distance portion 750 applies (DIN ISO 13666:2019, section 3.2.20). The verification power 753 is the dioptric power of the lens, specifically calculated and provided by the manufacturer as the reference for verification (DIN ISO 13666:2019, section 3.10.15). Moreover, the circular-shaper structure 701 is surrounding the central clear zone 710 which comprises a central clear zone width cw710 of 7.0 mm. The width w701 of the circular-shaper structure 701 corresponds to 0.5 mm. The neighboring circular-shaper structure 702 is arranged concentrically to the circular-shaper structure 701 with a pitch p701 of 1.5 mm. The pitch p701 is the distance from the inner onset of circular-shaper structure 701 to the inner onset of the circular-shaper structure 702. The ratio of the width w701 and the pitch p701 results in a length- based fill factor lf701 of 33.3% and a surface-based fill factor of 29.4%.

The near portion 770 comprises two circular-shaped focusing structures 711 and 712. Said structures are concentrically arranged towards the near reference point 771. The near reference point 771 is the point on the front surface of the spectacle lens at which the verification power 753 for the near portion 770 applies (DIN ISO 13666:2019, section 3.2.21). The verification power 753 is the dioptric power of the lens, specifically calculated and provided by the manufacturer as the reference for verification (DIN ISO 13666:2019, section 3.10.15). Moreover, the circular-shaper structure 701 is surrounding the central clear zone 720 which comprises a central clear zone width cw711 of 6.0 mm. The width w711 of the circular-shaper structure 711 corresponds to 0.5 mm. The neighboring circular-shaper structure 712 is arranged concentrically to the circular-shaper structure 711 with a pitch p711 of 1.1 mm. The pitch p711, is the distance from the inner onset of circular-shaper structure 711 to the inner onset of the circular-shaper structure 712. The ratio of the width w711 and the pitch p711 results in a length-based fill factor lf711 of 45.5% and a surface-based fill factor of 41.6%.

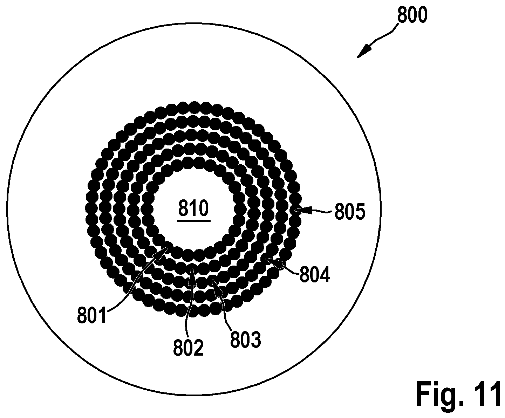

Another example not falling under the scope of the claimed invention is described with respect to Figure 11 which shows a single vision spectacle lens 800. The single vision spectacle lens 800 comprises a central clear zone 810. The central clear zone 810 in this example has a focal power being designed for the correction of an existing myopia of the wearer. In the present example, the single vision spectacle lens 800 comprises additional five circular-shaped focusing structures 801 to 805. Circular-shaped means ring-shaped with a circular contour if viewed from front. In this embodiment the circular-shaped focusing structures 801 to 805 comprises single lenslets which are connected to each other within one circular-shaped focusing structure 801 to 805.

The circular-shaped focusing structures 801 to 805 are formed such that an additional focal power of 12 diopters is provided as compared to the focal power of the central clear zone 810. This additional focal power is recognized by the wearer as blur and is demonstrated e.g., in Li X, Ding C, Li Y, Lim EW, Gao Y, Fermigier B, Yang A, Chen H, Bao J. Influence of Lenslet Configuration on Short-Term Visual Performance in Myopia Control Spectacle Lenses. Frontiers in Neuroscience 2021. This additional focal power leads to a reduction of progression of myopia of the wearer.

The single vision spectacle lens 800 shown in Figure 11 has a diameter of 7 cm. Therefore, the lens 800 of Figure 11 requires an edging process in order, to fit into a respective spectacle frame. The single vision spectacle lens 800 comprises five circular-shaped focusing structures 801 to 805. Said circular-shaped focusing structures 801 to 805 are concentrically arranged towards the optical center of the single vision spectacle lens 800. Moreover, the circular-shaped focusing structure 801 is surrounding the central clear zone 810 having a circular central clear zone width cw810 of 6.0 mm. The width w801 of the circular-shaped focusing structure 801 is 0.5 mm. The neighboring circular-shaped structure 802 is arranged concentrically to the inner circular-shaped structure 801, encircling the circular central clear zone 810, with a pitch p801 of 1.7 mm. The ratio of the width w801 and the pitch p801 results in a length-based fill factor lf801 of 29.4% and a surface-based fill factor of 24.8%.

Table 1 below shows different design characteristics of the inventive spectacle lens, in the order of satisfaction of wearability of the wearer. The subjects of a study evaluated said design characteristics in a range from 1 to 10, wherein 10 equals to best possible wearability of a spectacle lens (e.g., a single vision spectacle lens with a length-based fill factor of 0%) and 1 equals to the worst possible wearability of a spectacle lens (e.g., a single vision spectacle lens with a length-based fill factor of 100%). A satisfaction of wearability greater or equal to 4.0 is considered as sufficient, hence the children would probably accept such lenses with said satisfaction of wearability and would probably not to tend to dismiss the spectacle lens.

The lenses 1 to 9 in Table 1 are therefore further embodiments of the inventive spectacle lens and the lenses 10 to 16 are considered as reference lenses for the lenses 1 to 9 in reference to the satisfaction of wearability.

Table 1. Design characteristics of selected lenses with the specific characterizations and wearer satisfaction and visual acuity when looking through the periphery of the lens.

| ID | Pitch Width [mm] | Zylinder Width [mm] | ADD Power [D] | Diameter Clear Zone [mm] | Length-based fill factor [%] | Satisfaction of wearability (1-10) | Visual Acuity @ 20° [logMAR] |
|---|---|---|---|---|---|---|---|
| Lens 1 | 1 | 0.5 | 8 | 9.4 | 50 | 6.1 | 0.0 |
| Lens 2 | 1.2 | 0.6 | 8 | 9.4 | 50 | 5.7 | 0.2 |
| Lens 3 | 1 | 0.5 | 10 | 9.4 | 50 | 5.4 | 0.1 |
| Lens 4 | 1.2 | 0.6 | 10 | 9.4 | 50 | 5.0 | 0.1 |
| Lens 5 | 1.2 | 0.6 | 12 | 9.4 | 50 | 4.9 | 0.1 |

(continued)

| ID | Pitch Width [mm] | Zylinder Width [mm] | ADD Power [D] | Diameter Clear Zone [mm] | Length-based fill factor [%] | Satisfaction of wearability (1-10) | Visual Acuity @ 20° [logMAR] |
|---|---|---|---|---|---|---|---|
| Lens 6 | 1.2 | 0.84 | 8 | 9.4 | 70 | 4.3 | 0.4 |
| Lens 7 | 1 | 0.5 | 12 | 9.4 | 50 | 4.3 | 0.1 |
| Lens 8 | 1 | 0.7 | 8 | 9.4 | 70 | 4.3 | 0.4 |
| Lens 9 | 1.2 | 0.6 | 8 | 7 | 50 | 4.3 | 0.1 |
| Lens 10 | 1 | 0.7 | 10 | 9.4 | 70 | 3.9 | 0.3 |
| Lens 11 | 1.2 | 0.84 | 10 | 9.4 | 70 | 3.7 | 0.3 |
| Lens 12 | 0.86 | 0.6 | 8 | 7 | 70 | 3.6 | 0.2 |
| Lens 13 | 1 | 0.7 | 12 | 9.4 | 70 | 3.0 | 0.2 |
| Lens 14 | 0.86 | 0.6 | 12 | 7 | 70 | 2.6 | 0.4 |
| Lens 15 | 0.86 | 0.6 | 10 | 7 | 70 | 2.4 | 0.3 |
| Lens 16 | 1.2 | 0.84 | 12 | 9.4 | 70 | 2.3 | 0.3 |

**Claims**

1. Spectacle lens (100 to 800) comprising

a central clear zone (110, 210, 310, ...) having a central clear zone width (cw110, cw210, cw310, ...), said central clear zone width (cw110, cw210, cw310, ...) being within a range of 6 mm to 9.4 mm, and
a plurality of ring-shaped focusing structures (101, 102, 103, ...) or a plurality of ring-shaped diffusing structures (301, 302, 303, ...) each having a respective width (w101, w102, w103, ...; w301, w302, w303, ...), said respective width (w101, w102, w103, ... ; w301, w302, w303, ...) being equal to or lower than 0.7 mm, each structure of said more ring-shaped focusing structures or said more ring-shaped diffusing structures surrounding a structure-free zone and there is a path within each structure which runs from a starting point within the structure around the structure-free zone and to the starting point again,
said spectacle lens being **characterized in**
having a surface-based fill factor (sf101, sf201) within at least one range of the following group of ranges:

- a range of 34.6 to 59.2%,
- a range of 46.4 to 47.7%,

said surface-based fill factor being defined as a surface area ratio of a surface area of an innermost of said more ring-shaped focusing structures (101, 102, 103, ...) and a sum of said surface area of said innermost one ring-shaped focusing structure (101, 102, 103, ...) and an area of a peripheral clear zone, said area of said peripheral clear zone being enclosed by an outer onset line of said innermost ring-shaped focusing structure and an inner onset line of a neighbouring ring-shaped focusing structure, or said surface-based fill factor being as a surface area ratio of a surface area of an innermost of said more ring-shaped diffusing structures (301, 302, 303, ...) and a sum of said surface area of said innermost one ring-shaped diffusing structure (301, 302, 303, ...) and an area of a peripheral clear zone, said area of said peripheral clear zone being enclosed by an outer onset line of said innermost ring-shaped diffusing structure and an inner onset line of a neighbouring ring-shaped diffusing structure.

2. Spectacle lens (100 to 800) according to claim 1, **characterized in that**
said widths (w101, w102, w103, ...; w201, w202, w203) of said ring-shaped focusing structures (101, 102, 103, ...) or said ring-shaped diffusing structures (301, 302, 303, ...) are within at least one range of the following group of ranges:

(i) said width (w101, w102, w103, ...; w201, w202, w203) is larger than 0.2 mm and equal or lower than 0.7 mm;
(ii) said width (w101, w102, w103, ...; w201, w202, w203) is larger than 0.3 mm and equal or lower than 0.7 mm;

(iii) said width (w101, w102, w103, ...; w201, w202, w203) is equal or lower than 0.6 mm;
(iv) said width (w101, w102, w103, ...; w201, w202, w203) is larger than 0.2 mm and equal or lower than 0.6 mm;
(v) said width (w101, w102, w103, ...; w201, w202, w203) is larger than 0.3 mm and equal or lower than 0.6 mm;
(vi) said width (w101, w102, w103, ...; w201, w202, w203) is equal or lower than 0.5 mm;
(vii) said width (w101, w102, w103, ...; w201, w202, w203) is larger than 0.2 mm and equal or lower than 0.5 mm;
(viii) said width (w101, w102, w103, ...; w201, w202, w203) is larger than 0.3 mm and equal or lower than 0.5 mm.

3. Spectacle lens (100, 300 to 800) according to any one of the preceding claims, **characterized in that** said central clear zone width (cw110, cw 210, cw310, ...) is within at least one range of the following group of ranges:

(i) said central clear zone width (cw110, cw210, cw310, ...) is larger than 6 mm and lower than or equal to 7 mm;
(ii) said central clear zone width (cw110, cw210, cw310, ...) is larger than 7 mm and lower or equal than 9.4 mm.

4. Spectacle lens (100, 300 to 800) according to any one of the preceding claims, **characterized in that** said ring-shaped focusing structures or said ring-shaped diffusing structures each are circular-shaped.

5. Spectacle lens (100, 300 to 800) according to claim 4, **characterized in that** a length-based fill factor is in a range of 40% to 60%, said length-based fill factor being defined as ratio of a width of an inner circular-shaped focusing structure adjacent to a clear zone and a radial distance between said inner circular-shaped focusing structure and a neighbouring circular-shaped focusing structure.

6. Spectacle lens (100, 300 to 800) according one of the preceding claims, **characterized in that** said more ring-shaped focusing structures (101, 102, 103, ...) providing an additional power (ADD) as compared to said central clear zone (110, 310 ...) within at least one range of the following group of ranges:

(i) said additional power (ADD) is larger than 6 diopter and equal to or lower than 12 diopter;
(ii) said additional power (ADD) is larger than 7 diopter and equal to or lower than 11 diopter;
(iii) said additional power (ADD) is larger than 8 diopter and equal to or lower than 10 diopter.

7. Spectacle lens (100 to 800) according to claims 1 to 6 in the form of computer-readable data configured for the purpose of a use of the computer-readable data for a manufacture of the spectacle lens, stored on a computer-readable data carrier.

8. Spectacle lens (100 to 800) according to claims 1 to 6 in the form of a data carrier signal, configured for the purpose of a use for a manufacture of the spectacle lens.

9. Data carrier storing the computer-readable data according to claim 7.

**Patentansprüche**

1. Brillenglas (100 bis 800), aufweisend:

eine zentrale klare Zone (110, 210, 310, ...) mit einer Breite (cw110, cw210, cw310, ...) der zentralen klaren Zone, wobei die Breite (cw110, cw210, cw310, ...) der zentralen klaren Zone innerhalb eines Wertebereichs von 6 mm bis 9,4 mm liegt, und
eine Mehrzahl von ringförmigen Fokussierstrukturen (101, 102, 103, ...) oder eine Mehrzahl von ringförmigen Diffusionsstrukturen (301, 302, 303, ...), die jeweils eine entsprechende Breite (w101, w102, w103, ...; w301, w302, w303, ...) aufweisen, wobei die entsprechende Breite (w101, w102, w103, ...; w301, w302, w303, ...) gleich oder kleiner als 0,7 mm ist, wobei jede Struktur der mehreren ringförmigen Fokussierstrukturen oder der mehreren ringförmigen Diffusionsstrukturen eine strukturfreie Zone umgibt und es einen Weg innerhalb jeder Struktur gibt, der von einem Startpunkt innerhalb der Struktur um die strukturfreie Zone herum und wieder zu dem Startpunkt verläuft,
wobei das Brillenglas **gekennzeichnet ist durch**
einen flächenbasierten Füllfaktor (sf101, sf201) innerhalb mindestens eines Wertebereichs der folgenden Gruppe von Wertebereichen:

- ein Wertebereich von 34,6 bis 59,2 %,

- ein Wertebereich von 46,4 bis 47,7 %,

wobei der flächenbasierte Füllfaktor definiert ist als ein Oberflächenbereichverhältnis eines Oberflächenbereichs einer innersten ringförmigen Fokussierstrukturen (101, 102, 103, ...) und einer Summe des Oberflächenbereichs der innersten ringförmigen Fokussierstruktur (101, 102, 103, ...) und eines Bereichs einer peripheren klaren Zone,

wobei der Bereich der peripheren klaren Zone von einer äußeren Anfangslinie der innersten ringförmigen Fokussierstruktur und einer inneren Anfangslinie einer benachbarten ringförmigen Fokussierstruktur umgeben ist, oder der flächenbasierte Füllfaktor definiert ist als ein Oberflächenbereichsverhältnis eines Oberflächenbereichs einer innersten der mehreren ringförmigen Diffusionsstrukturen (301, 302, 303, ....) und einer Summe des Oberflächenbereichs der innersten ringförmigen Diffusionsstruktur (301, 302, 303, ...) und eines Bereichs einer peripheren klaren Zone, wobei der Bereich der peripheren klaren Zone von einer äußeren Anfangslinie der innersten ringförmigen Diffusionsstruktur und einer inneren Anfangslinie einer benachbarten ringförmigen Diffusionsstruktur umgeben ist.

2. Brillenglas (100 bis 800) nach Anspruch 1, **dadurch gekennzeichnet, dass** die Breiten (w101, w102, w103, ...; w201, w202, w203) der ringförmigen Fokussierstrukturen (101, 102, 103, ...) oder der ringförmigen Diffusionsstrukturen (301, 302, 303, ...) innerhalb mindestens eines Wertebereichs der folgenden Gruppe von Wertebereichen liegen:

(i) die Breite (w101, w102, w103, ...; w201, w202, w203) ist größer als 0,2 mm und gleich oder kleiner als 0,7 mm;
(ii) die Breite (w101, w102, w103, ...; w201, w202, w203) ist größer als 0,3 mm und gleich oder kleiner als 0,7 mm;
(iii) die Breite (w101, w102, w103, ...; w201, w202, w203) ist gleich oder kleiner als 0,6 mm;
(iv) die Breite (w101, w102, w103, ...; w201, w202, w203) ist größer als 0,2 mm und gleich oder kleiner als 0,6 mm;
(v) die Breite (w101, w102, w103, ...; w201, w202, w203) ist größer als 0,3 mm und gleich oder kleiner als 0,6 mm;
(vi) die Breite (w101, w102, w103, ...; w201, w202, w203) ist gleich oder kleiner als 0,5 mm;
(vii) die Breite (w101, w102, w103, ...; w201, w202, w203) ist größer als 0,2 mm und gleich oder kleiner als 0,5 mm;
(viii) die Breite (w101, w102, w103, ...; w201, w202, w203) ist größer als 0,3 mm und gleich oder kleiner als 0,5 mm.

3. Brillenglas (100, 300 bis 800) nach einem der vorhergehenden Ansprüche, **dadurch gekennzeichnet, dass** die Breite (cw110, cw 210, cw310, ...) der zentralen klaren Zone innerhalb mindestens eines Wertebereichs der folgenden Gruppe von Wertebereichen liegt:

(i) die Breite (cw110, cw210, cw310, ...) der zentralen klaren Zone ist größer als 6 mm und kleiner oder gleich 7 mm;
(ii) die Breite (cw110, cw210, cw310, ...) der zentralen klaren Zone ist größer als 7 mm und kleiner oder gleich 9,4 mm.

4. Brillenglas (100, 300 bis 800) nach einem der vorhergehenden Ansprüche, **dadurch gekennzeichnet, dass** die ringförmigen Fokussierstrukturen oder die ringförmigen Diffusionsstrukturen jeweils kreisförmig sind.

5. Brillenglas (100, 300 bis 800) nach Anspruch 4, **dadurch gekennzeichnet, dass** ein längenbasierter Füllfaktor in einem Wertebereich von 40 % bis 60 % liegt, wobei der längenbasierte Füllfaktor als Verhältnis einer Breite einer inneren kreisförmigen Fokussierstruktur benachbart einer klaren Zone und eines radialen Abstands zwischen der inneren kreisförmigen Fokussierstruktur und einer benachbarten kreisförmigen Fokussierstruktur definiert ist.

6. Brillenglas (100, 300 bis 800) nach einem der vorhergehenden Ansprüche, **dadurch gekennzeichnet, dass** die mehreren ringförmigen Fokussierstrukturen (101, 102, 103, ...) eine zusätzliche Brechkraft (ADD) im Vergleich zu der zentralen klaren Zone (110, 310, ...) innerhalb mindestens eines Wertebereichs der folgenden Gruppe von Wertebereichen bereitstellen:

(i) die zusätzliche Brechkraft (ADD) ist größer als 6 Dioptrien und gleich oder kleiner als 12 Dioptrien;
(ii) die zusätzliche Brechkraft (ADD) ist größer als 7 Dioptrien und gleich oder kleiner als 11 Dioptrien;
(iii) die zusätzliche Brechkraft (ADD) ist größer als 8 Dioptrien und gleich oder kleiner als 10 Dioptrien.

7. Brillenglas (100 bis 800) nach einem der Ansprüche 1 bis 6 in Form von computerlesbaren Daten, die für den Zweck einer Verwendung der computerlesbaren Daten für eine Herstellung des Brillenglases ausgelegt und auf einem computerlesbaren Datenträger gespeichert sind.

8.  Brillenglas (100 bis 800) nach einem der Ansprüche 1 bis 6 in Form eines Datenträgersignals, das für den Zweck der Verwendung für die Herstellung des Brillenglases ausgelegt ist.

9.  Datenträger, auf dem die computerlesbaren Daten nach Anspruch 7 gespeichert sind.

**Revendications**

1.  Verre de lunettes (100 à 800) comprenant

    une zone centrale transparente (110, 210, 310, ...) ayant une largeur de zone centrale transparente (cw110, cw210, cw310, ...), ladite largeur de zone centrale transparente (cw110, cw210, cw310, ...) se situant dans une plage de 6 mm à 9,4 mm, et
    une pluralité de structures de focalisation de forme annulaire (101, 102, 103, ...) ou une pluralité de structures de diffusion de forme annulaire (301, 302, 303, ...) ayant chacune une largeur respective (w101, w102, w103, **...** ; w301, w302, w303, ...), ladite largeur respective (w101, w102, w103, ... ; w301, w302, w303, ...) étant égale ou inférieure à 0,7 mm, chaque structure parmi lesdites structures de focalisation de forme annulaire ou lesdites structures de diffusion de forme annulaire entourant une zone sans structure, et un chemin existant à l'intérieur de chaque structure, lequel chemine depuis un point de départ à l'intérieur de la structure autour de la zone sans structure et de nouveau jusqu'au point de départ,
    ledit verre de lunettes étant **caractérisé en ce que** il a un facteur de remplissage basé sur la surface (sf101, sf201) dans au moins une plage du groupe suivant de plages :

    - une plage de 34,6 à 59,2 %,
    - une plage de 46,4 à 47,7 %,

    ledit facteur de remplissage basé sur la surface est défini comme un rapport de superficies entre une superficie d'une structure la plus à l'intérieur parmi lesdites structures de focalisation de forme annulaire (101, 102, 103, ...) et une somme de ladite superficie de ladite structure de focalisation de forme annulaire la plus à l'intérieur (101, 102, 103, ...) et d'une superficie d'une zone périphérique transparente, ladite superficie de ladite zone périphérique transparente étant entourée par une ligne externe de début de ladite structure de focalisation de forme annulaire la plus à l'intérieur et une ligne interne de début d'une structure de focalisation de forme annulaire voisine, ou bien ledit facteur de remplissage basé sur la surface est défini comme un rapport de superficies entre une superficie d'une structure la plus à l'intérieur parmi lesdites structures de diffusion de forme annulaire (301, 302, 303, ...) et une somme de ladite superficie de ladite structure de diffusion de forme annulaire la plus à l'intérieur (301, 302, 303, ...) et d'une superficie d'une zone périphérique transparente, ladite superficie de ladite zone périphérique transparente étant entourée par une ligne externe de début de ladite structure de diffusion de forme annulaire la plus à l'intérieur et une ligne interne de début d'une structure de diffusion de forme annulaire voisine.

2.  Verre de lunettes (100 à 800) selon la revendication 1, **caractérisé en ce que**
    lesdites largeurs (w101, w102, w103, ... ; w201, w202, w203) desdites structures de focalisation de forme annulaire (101, 102, 103, ...) ou desdites structures de diffusion de forme annulaire (301, 302, 303, ...) se situent dans au moins une plage du groupe suivant de plages :

    (i) ladite largeur (w101, w102, w103, ... ; w201, w202, w203) est supérieure à 0,2 mm et égale ou inférieure à 0,7 mm ;
    (ii) ladite largeur (w101, w102, w103, ... ; w201, w202, w203) est supérieure à 0,3 mm et égale ou inférieure à 0,7 mm ;
    (iii) ladite largeur (w101, w102, w103, ... ; w201, w202, w203) est égale ou inférieure à 0,6 mm ;
    (iv) ladite largeur (w101, w102, w103, ... ; w201, w202, w203) est supérieure à 0,2 mm et égale ou inférieure à 0,6 mm ;
    (v) ladite largeur (w101, w102, w103, w201, w202, w203) est supérieure à 0,3 mm et égale ou inférieure à 0,6 mm ;
    (vi) ladite largeur (w101, w102, w103, ... ; w201, w202, w203) est égale ou inférieure à 0,5 mm ;
    (vii) ladite largeur (w101, w102, w103, ... ; w201, w202, w203) est supérieure à 0,2 mm et égale ou inférieure à 0,5 mm ;
    (viii) ladite largeur (w101, w102, w103, ... ; w201, w202, w203) est supérieure à 0,3 mm et égale ou inférieure à 0,5 mm.

3. Verre de lunettes (100, 300 à 800) selon l'une quelconque des revendications précédentes, **caractérisé en ce que** ladite largeur de zone centrale transparente (cw110, cw210, cw310, ...) se situe dans au moins une plage du groupe suivant de plages :

   (i) ladite largeur de zone centrale transparente (cw110, cw210, cw310, ...) est supérieure à 6 mm et inférieure ou égale à 7 mm ;
   (ii) ladite largeur de zone centrale transparente (cw110, cw210, cw310, ...) est supérieure à 7 mm et inférieure ou égale à 9,4 mm.

4. Verre de lunettes (100, 300 à 800) selon l'une quelconque des revendications précédentes, **caractérisé en ce que** lesdites structures de focalisation de forme annulaire ou lesdites structures de diffusion de forme annulaire sont chacune de forme circulaire.

5. Verre de lunettes (100, 300 à 800) selon la revendication 4, **caractérisé en ce qu'**un facteur de remplissage basé sur la longueur se situe dans une plage de 40 % à 60 %, ledit facteur de remplissage basé sur la longueur étant défini comme un rapport entre une largeur d'une structure de focalisation de forme circulaire interne adjacente à une zone transparente et une distance radiale entre ladite structure de focalisation de forme circulaire interne et une structure de focalisation de forme circulaire voisine.

6. Verre de lunettes (100, 300 à 800) selon une des revendications précédentes, **caractérisé en ce que** lesdites structures de focalisation de forme annulaire (101, 102, 103, ...) apportent une puissance supplémentaire (ADD) par rapport à ladite zone centrale transparente (110, 310 ...) dans au moins une plage du groupe suivant de plages :

   (i) ladite puissance supplémentaire (ADD) est supérieure à 6 dioptries et égale ou inférieure à 12 dioptries ;
   (ii) ladite puissance supplémentaire (ADD) est supérieure à 7 dioptries et égale ou inférieure à 11 dioptries ;
   (iii) ladite puissance supplémentaire (ADD) est supérieure à 8 dioptries et égale ou inférieure à 10 dioptries.

7. Verre de lunettes (100 à 800) selon les revendications 1 à 6 sous la forme de données lisibles par ordinateur conçues à des fins d'utilisation des données lisibles par ordinateur pour la fabrication du verre de lunettes, stockées sur un support de données lisible par ordinateur.

8. Verre de lunettes (100 à 800) selon les revendications 1 à 6 sous la forme d'un signal porteur de données, conçu à des fins d'utilisation pour la fabrication du verre de lunettes.

9. Support de données stockant les données lisibles par ordinateur selon la revendication 7.

Fig. 1

Fig. 2

Fig. 3

Fig. 4

Fig. 5

Fig. 6

400

410

405

404

403

402

401

**Fig. 7**

500

510

505

504

503

502

501

**Fig. 8**

**Fig. 9**

**Fig. 10**

Fig. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3561578 A1
- WO 2019166659 A1
- WO 2021069443 A1
- CN 10963925 A
- US 2011051079 A1
- EP 3888894 A1
- CN 111103701 B
- US 20190227342 A1
- CN 213659117 U
- WO 2010075319 A2
- WO 2018026697 A1
- WO 2019152438 A1
- WO 2020014613 A1

**Non-patent literature cited in the description**

- **SANKARIDURG, P** ; **DONOVAN, L** ; **VARNAS, S.** ; **HO, A.** ; **CHEN, X.** ; **MARTINEZ, A.** ; **FISHER, S.** ; **LIN, Z.** ; **SMITH, E.L** ; **3RD, GE, J.** Spectacle lenses designed to reduce progression of myopia: 12-month results. *Optom Vis Sci*, vol. 87 (9), 631-641
- **BAO J** ; **YANG A** ; **HUANG Y** ; **LI X** ; **PAN Y** ; **DING C** ; **LIM EW** ; **ZHENG J** ; **SPIEGEL DP** ; **DROBE B**. One-year myopia control efficacy of spectacle lenses with aspherical lenslets. *Br J Ophthalmol.*, 2021, 318367
- **LI X** ; **DING C** ; **LI Y** ; **LIM EW** ; **GAO Y** ; **FERMIGIER B** ; **YANG A** ; **CHEN H** ; **BAO J**. Influence of Lenslet Configuration on Short-Term Visual Performance in Myopia Control Spectacle Lenses. *Frontiers in Neuroscience*, 2021
- **LI X** ; **DING C** ; **LI Y** ; **LIM EW** ; **GAO Y** ; **FERMIGIER B** ; **YANG A** ; **CHEN H** ; **BAO J.** Influence of Lenslet Configuration on Short-Term Visual Performance in Myopia Control Spectacle Lenses. *Frontiers in Neuroscience*, 2021
- **LI X** ; **DING C** ; **LI Y** ; **LIM EW** ; **GAO Y** ; **FERMIGIER B** ; **YANG A** ; **CHEN H** ; **BAO J**. Influence of Lenslet Configuration on Short-Term Visual Performance in Myopia Control Spectacle Lenses.. *Frontiers in Neuroscience*, 2021